# FASCICULE DE BREVET EUROPEEN

(11) **EP 1 998 053 B1**
(45) Date de publication et mention de la délivrance du brevet: **16.09.2015**
(21) Numéro de dépôt: 08156936.0
(22) Date de dépôt: 27.05.2008
(51) Int. Cl.: F04F 5/46, F04F 5/54, F25B 41/00

(54) **Pompe à éjecteur**
Ejektorpumpe
Ejector pump

(30) Priorité: 31.05.2007 DE 102007025225
(43) Date de publication de la demande: 03.12.2008
(73) Titulaire: Valeo Klimasysteme GmbH, 96476 Rodach (DE)
(72) Inventeur: Haussmann, Roland, 69168 Wiesloch (DE)
(74) Mandataire: Léveillé, Christophe

(56) Documents cités:
- EP-A1- 1 160 522
- EP-A2- 0 447 134
- EP-A2- 0 889 244
- DE-C- 904 984
- FR-A1- 2 541 390
- GB-A- 155 137
- GB-A- 237 309
- US-A- 4 041 984
- US-A1- 2004 089 019

## Description

La présente invention concerne une pompe à éjecteur fonctionnant de manière optimale en ce qui concerne le mode d'action et le comportement sonore, telle qu'elle est utilisée par exemple dans les climatiseurs pour véhicules avec deux circuits, pour obtenir de bonnes performances, ainsi qu'une grande efficacité et rentabilité du climatiseur.

De nos jours, un des principaux défis dans le développement de véhicules motorisés, c'est-à-dire de véhicules automobiles, est, outre l'optimisation du comportement sonore, la baisse de la consommation de carburant. Cela concerne en particulier les véhicules, comme par exemple les automobiles, les poids lourds, les bus, etc. équipés de climatiseurs. Un objectif de développement principal est donc d'abaisser avant tout la consommation de carburant occasionnée en plus par le fonctionnement du climatiseur, qui à présent, est également indiquée dans les prospectus fournis avec le véhicule. On s'efforce donc d'obtenir ou d'améliorer le confort offert par un véhicule équipé d'un climatiseur, ainsi que, outre la consommation énergétique, c'est-à-dire la consommation de carburant certifiée, avant tout la consommation énergétique, c'est-à-dire la consommation de carburant engendrée en supplément par l'utilisation du climatiseur, c'est-à-dire par le fonctionnement du compresseur. On essaie donc par conséquent d'augmenter les performances des climatiseurs.

Pour augmenter l'efficacité de fonctionnement d'un climatiseur pour un véhicule automobile de ce type, des climatiseurs sont entre-temps utilisés, qui sont équipés d'un compresseur commandé de manière externe, d'un détendeur thermostatique pour une alimentation transversale au niveau de l'évaporateur ou de la zone de surchauffe et facultativement en plus d'un radiateur de chauffage interne. Le radiateur de chauffage interne supplémentaire échange alors la chaleur entre le fluide circulant du côté haute pression et du côté basse pression du circuit du climatiseur pour améliorer l'efficacité du circuit de production de froid.

Avec des climatiseurs sans radiateur de chauffage interne, le dispositif de détente, c'est-à-dire le détendeur thermostatique, avec la possibilité d'alimentation transversale au niveau de l'évaporateur, est avant tout d'une importance particulière. Le mode de fonctionnement est alors déterminé par la pression d'une sonde sur l'une quelconque des faces de la membrane d'un robinet de ce type et par la pression de l'évaporateur ainsi que par la pression de ressort sur l'autre face de la membrane du robinet. Un détendeur thermostatique de ce type règle ou commande d'une part le flux massique arrivant du fluide circulant, qui se trouve à une température élevée et sous haute pression dans l'évaporateur, ce fluide provenant sous forme gazeuse du compresseur ou sous forme de liquide du condenseur. D'autre part, le détendeur thermostatique réduit aussi la pression du fluide circulant du niveau de pression du condenseur au niveau de pression de l'évaporateur.

Comme cela a déjà été évoqué, l'étranglement du flux de réfrigérant dans des systèmes de climatisation de ce type est commandé, du côté haute pression au côté basse pression, principalement par le détendeur thermostatique. L'écoulement ou le flux massique du réfrigérant ou du fluide circulant à travers l'évaporateur est alors régulé en fonction de l'état du fluide circulant au niveau de la sortie de l'évaporateur. Fréquemment, une fermeture et une ouverture cyclique du détendeur ont lieu à la place d'une modulation continue de la vitesse d'écoulement du fluide circulant. La fermeture et l'ouverture du détendeur ont lieu alors en fonction des conditions de fonctionnement ou de sollicitation. Dans des conditions de grande sollicitation, le risque existe que le réfrigérant sorte de l'évaporateur. Dans des conditions de sollicitation moindres, l'évaporateur est submergé par le réfrigérant. La submersion de l'évaporateur avec le réfrigérant d'une part, tout comme l'état vidé de l'évaporateur d'autre part, entraîne une réduction de l'efficacité et des performances du climatiseur. Par la suite, quelques inconvénients principaux d'un climatiseur équipé d'un détendeur thermostatique vont être identifiés et brièvement explicités.

En règle générale, il existe un équilibre entre la pression de la sonde et celle provenant de la pression de l'évaporateur et de la pression de ressort. La pression de ressort détermine alors la surchauffe (statique), c'est-à-dire la différence de la température mesurée au niveau de la sonde du détendeur et la température d'évaporation.

La réalisation d'un climatiseur de ce type, avec un détendeur thermostatique, n'offre de bonnes performances du climatiseur qu'en l'état de fonctionnement nominal. En d'autres termes, les détendeurs thermostatiques ont une zone de fonctionnement limitée. Leur utilisation entraîne aussi quelques problèmes et difficultés en ce qui concerne la maintenance. Ainsi, il peut être par exemple nécessaire de devoir ajuster la surchauffe au niveau du détendeur pour ne pas amplifier la chute de pression par l'évaporateur. En outre, un surrefroidissement insuffisant avant le détendeur a un effet négatif sur la pression d'aspiration. Le détendeur peut soit être trop petit, soit trop grand. Dans le cas d'un trop grand dimensionnement du détendeur, le risque est présent, que le climatiseur agisse selon un mode qualifié de « balancier ». Cela a pour conséquence de devoir ajuster la surchauffe et/ou de devoir échanger la buse du détendeur contre une plus petite. Un détendeur trop grand ou un mauvais réglage de celui-ci peut conduire à ce que la pression d'aspiration soit trop importante. De plus, la pression d'aspiration peut être trop faible lorsque la chute de pression par le détendeur est inférieure à la pression pour laquelle il a été conçu.

Il existe aussi le risque que la charge s'échappe ou migre du détendeur. Cela engendre une pression d'aspiration trop faible, ce qui réduit aussi les performances du climatiseur. Une autre cause de ce problème peut aussi résider dans le fait que la buse du détendeur peut être par exemple encrassée. De plus, il est aussi très important de savoir si le bon réfrigérant est utilisé. Il est également possible qu'une fixation inappropriée de la sonde sur le côté aspiration, par exemple sur le point collecteur, le tube ascendant, à proximité d'une grande bride, etc. ait un effet préjudiciable sur le mode de fonctionnement, comme décrit encore par la suite à titre d'exemple. Dans le cas d'un détendeur d'une trop grande puissance ou d'une surchauffe réglée trop faiblement, le risque d'un coup de liquide dans le compresseur est présent. Une sonde mal installée ou un mauvais contact de la sonde avec la conduite d'aspiration peut également conduire à des conséquences de ce genre.

La publication de demande allemande DE 10 2005 027 674 A1 expose par exemple un climatiseur de ce type pour des véhicules équipés d'un radiateur de chauffage interne et d'un détendeur thermostatique. Le CO₂ utilisé comme réfrigérant est alors aspiré par un compresseur et comprimé à une pression se trouvant en dessous du niveau de pression critique. Un radiateur de refroidissement de gaz raccordé à la suite du compresseur refroidit le réfrigérant sous haute pression à l'aide d'air frais en liaison avec un pulseur. Un détendeur variable, raccordé du côté sortie au radiateur de refroidissement de gaz décompresse alors le réfrigérant en un état à deux phases de faible pression et de basse température. Par la suite, dans le cadre de la climatisation de l'habitacle du véhicule, un évaporateur est alors raccordé, dans lequel le réfrigérant à faible pression et basse température soutire de la chaleur à partir du flux d'air pour l'habitacle. Un accumulateur est raccordé à l'évaporateur du côté sortie, c'est-à-dire du côté basse pression. Le radiateur de chauffage interne échange de la chaleur entre le réfrigérant d'une température relativement élevée et d'une pression relativement haute, lequel est passé par le radiateur de refroidissement de gaz, c'est-à-dire le radiateur, et le réfrigérant gazeux à basse température et de faible pression aspiré par le compresseur à partir de l'accumulateur. Le climatiseur décrit nécessite d'une part un dispositif de détente thermostatique relativement cher, sujet aux défaillances et complexe à régler. D'autre part, il existe par exemple le risque que, lorsque l'accumulateur conserve le réfrigérant disponible, peu de réfrigérant puisse parvenir dans le condenseur, c'est-à-dire dans le radiateur de refroidissement de gaz. Outre une pression maximale plus faible, ceci entraîne aussi une sous-alimentation de l'évaporateur, c'est-à-dire de ses surfaces, avec le fluide circulant, cette sous-alimentation engendrant une réduction des performances et de la rentabilité du climatiseur, ce qui a un effet négatif sur la consommation de carburant supplémentaire du véhicule.

Le document DE 100 13 717 A1 décrit par exemple un climatiseur avec un détendeur électronique à la place d'un détendeur thermostatique, qui peut commander le débit, c'est-à-dire le flux massique du fluide circulant en fonction d'un signal externe. Une température d'entrée et de sortie du fluide circulant est alors détectée au niveau de l'évaporateur à l'aide de sondes pour commander directement la température de l'air au niveau de la sortie de l'évaporateur, qui est également détectée par une sonde. Lorsque la surchauffe du fluide circulant augmente, la température de l'air sortant de l'évaporateur augmente également. Le problème par exemple est alors que, si la température de l'air à la sortie de l'évaporateur doit être augmentée, il est nécessaire d'augmenter également la surchauffe d'une manière correspondante. Cela peut engendrer en particulier une mauvaise homogénéité de la température, des performances diminuées de l'évaporateur, ainsi que des températures de compression trop élevées avec une réduction de la durée de vie du compresseur.

En outre, des systèmes de climatisation à double circuit avec des pompes à éjecteur intégrées sont connus, qui essaient d'éviter les problèmes et inconvénients cités ci-dessus rencontrés sur les climatiseurs décrits. Jusqu'à présent, les essais visant à utiliser une pompe à éjecteur dans les buts précédemment cités se sont avérés insuffisants, du fait que les pompes à éjecteur de ce type présentent toujours des déficits en ce qui concerne leur mode d'action fluidique et thermodynamique et également leur comportement sonore.

La publication de demande DE 10 2004 009 966 A1 décrit par exemple une pompe à éjecteur à utiliser dans un climatiseur. La pompe à éjecteur présente, au niveau de son entrée, une buse effilée avec une aiguille effilée intégrée dans le canal interne. L'extrémité en aval de l'aiguille est agencée sur la face en aval par rapport à l'ouverture de sortie de la buse et est déplacée en position, conformément à un état de fonctionnement. La partie d'augmentation de pression après la buse se compose, en aval de la buse, tout d'abord d'une partie de mélange d'un diamètre traversé constant puis d'une partie d'écoulement similaire à la géométrie d'un diffuseur.

La divulgation du document DE 10 2005 008 481 A1 décrit une pompe à éjecteur, la buse présentant, dans sa zone arrière, un diamètre de buse traversé, du type d'un diffuseur. La partie d'augmentation de pression de la pompe à éjecteur se compose alors également d'un diamètre traversé constant et, en aval, d'un diamètre de diffuseur. Un dispositif de décompression et de jonction de flux de fluide similaire à cette pompe à éjecteur est décrit dans le document EP 1 33b 169 A1.

On peut aussi noter que la demande de brevet EP 1 160 522 divulgue une pompe à éjecteur disposée dans un système de réfrigération d'un fluide.

La pompe à éjecteur comprend une entrée principale, une entrée latérale et une sortie. De plus, la pompe à éjecteur de la demande EP 1 160 522 présente, au niveau de l'entrée principale, une buse avec une sortie de buse et un diffuseur situé en aval de la buse. Plus particulièrement, la buse s'étend jusqu'à l'entrée dudit diffuseur.

Face au contexte de l'état de la technique, l'objectif de la présente invention consiste maintenant à proposer une pompe à éjecteur permettant le fonctionnement optimal d'un climatiseur avec facultativement en plus un radiateur de chauffage interne.

L'objectif de l'invention est atteint par la pompe à éjecteur dotée des caractéristiques des revendications indépendantes ainsi que du procédé mis à disposition selon les revendications indépendantes.

Des configurations supplémentaires et des modes de réalisation avantageux et opportuns de la pompe à éjecteur selon l'invention sont décrits dans les sous-revendications.

Selon l'idée de l'invention, une pompe à éjecteur spécialement conçue, particulièrement pour le climatiseur d'un véhicule ou d'un véhicule automobile, est donc prévue afin d'améliorer les propriétés d'écoulement du fluide circulant et d'éviter ou de réduire un développement de bruits. La pompe à éjecteur comprend ainsi au moins une entrée principale, au moins une entrée latérale et au moins une sortie. La pompe à éjecteur présente à au moins une entrée principale une buse avec au moins une entrée de buse et au moins une sortie de buse et un diffuseur situé en aval de la buse avec une entrée de diffuseur et une sortie de diffuseur. La buse de la pompe à éjecteur selon l'invention s'étend au moins jusqu'à l'entrée du diffuseur. L'entrée du diffuseur présente alors le plus petit diamètre traversé du diffuseur. De plus, la buse est similaire dans une première zone de buse à une partie de buse Laval.

On note que la première zone de buse formée de cette manière se trouve alors avantageusement au niveau de l'entrée principale de la pompe à éjecteur selon l'invention. Un mode de réalisation de ce type crée, en ce qui concerne le fluide circulant qui afflue par l'entrée principale, des conditions d'écoulement optimales pour le fluide circulant qui s'écoule, comme par exemple l'accélération de l'écoulement.

En outre, la buse est similaire dans une seconde zone de buse à une partie de tube.

On note aussi que la partie de tube peut alors par exemple être avantageusement constituée de cuivre, d'aluminium ou de magnésium. Une partie de tube peut de plus aussi par exemple être facilement fabriquée au moyen de l'extrusion. La partie de tube présente avantageusement, sur sa longueur, un diamètre traversé constant.

Avec la pompe à éjecteur selon l'invention, plusieurs avantages en ce qui concerne la construction, c'est-à-dire les composants nécessaires, le fonctionnement et l'utilisation du climatiseur sont obtenus lors de leur intégration dans un climatiseur correspondant. Il est par exemple possible, dans un climatiseur réalisé de manière appropriée, comme cela va être décrit par la suite à titre d'exemple et sans être restrictif, de renoncer à un détendeur thermostatique. Des caractéristiques et des aspects caractérisants essentiels résultent du mode de réalisation selon l'invention, même si l'on ne considère que le mode d'action de la pompe à éjecteur. Il est ainsi possible par exemple, du fait que la buse s'étend jusqu'à l'entrée du diffuseur, d'exploiter un courant diphasé sur le fluide circulant, qui pénètre dans la pompe à éjecteur par l'entrée principale, comme ce qu'il est convenu d'appeler un « courant jet » ou d'exploiter son effet sur le fluide circulant qui entre par l'entrée latérale. De plus, des écoulements turbulents fortement diminués surviennent avec la pompe à éjecteur selon l'invention, qui ont pour conséquence, que les effets de friction se réduisent dans l'écoulement et que les pertes par frottement sont également diminuées. Du fait que le fluide circulant de l'entrée principale et le fluide circulant de l'entrée latérale entrent dans la pompe à éjecteur tout d'abord dans la zone du diffuseur, c'est-à-dire dans la partie d'augmentation de pression, un mode de construction très compact de la pompe à éjecteur est également possible. La partie de mélange pour le fluide circulant qui afflue par l'entrée principale et pour le fluide circulant qui afflue par l'entrée latérale coïncide avantageusement avec la partie d'écoulement. Ceci engendre aussi un meilleur comportement sonore de la pompe à éjecteur, du fait que le fluide circulant aspiré qui afflue à l'intérieur de la pompe à éjecteur par le biais de l'entrée latérale, peut se régler par rapport à l'autre direction d'écoulement et ne pas être dévié subitement grâce à l'action d'aspiration décalée en aval du fluide circulant qui afflue par l'entrée principale. De manière avantageuse, un climatiseur de ce type, décrit uniquement à titre d'exemple, se compose alors d'un compresseur réglé ou commandé de manière externe ou interne qui aspire et comprime un fluide circulant présent à l'état d'agglomération gazeux. Le fluide circulant aspiré a alors une température et une pression encore plus spécifiques, résultant de l'installation de la pompe à éjecteur selon l'invention. Le compresseur est couplé fonctionnellement, en ce qui concerne son entraînement, de manière avantageuse à un moteur électrique ou à un moteur à combustion par exemple par le biais d'un mécanisme de transmission ou d'une courroie dentée. De plus, le climatiseur dispose en aval du compresseur, c'est-à-dire en direction de l'écoulement du fluide circulant, d'un radiateur de chauffage après le compresseur, servant, en ce qui concerne le fluide circulant, de condenseur. Le condenseur est par exemple traversé par le flux d'air d'un ventilateur lors du fonctionnement du climatiseur, le fluide circulant gazeux, qui se trouve sous haute pression, étant condensé, c'est-à-dire passant dans un état d'agglomération liquide. En outre, la sortie du condenseur est avantageusement reliée à l'entrée principale de la pompe à éjecteur selon l'invention et la sortie de la pompe à éjecteur est reliée à l'entrée d'un accumulateur. Pour former un premier circuit identifiable du climatiseur, une première sortie de l'accumulateur est à son tour reliée à l'entrée du compresseur, de manière à ce que le fluide circulant gazeux puisse être aspiré dans l'accumulateur par le compresseur. Le fluide circulant gazeux alors aspiré a une pression avantageuse plus élevée que sans l'utilisation de la pompe à éjecteur selon l'invention. Cela conduit avant tout à une décharge du compresseur et ainsi à une réduction de la consommation de carburant supplémentaire provoquée par le fonctionnement du compresseur. L'accumulateur dispose de plus d'une seconde sortie. Grâce à cette seconde sortie, un fluide circulant liquide de faible température peut circuler dans un radiateur de chauffage servant d'évaporateur. La sortie de l'évaporateur est alors reliée à l'entrée latérale de la pompe à éjecteur selon l'irivention pour former un second circuit identifiable du climatiseur. Le climatiseur dispose également, en plus de quelques composants non cités d'un type de construction connu, d'un radiateur de chauffage interne. Comme cela a déjà été décrit de manière implicite, le radiateur de chauffage interne échange alors de la chaleur entre le fluide circulant côté basse pression, qui est aspiré par le compresseur à partir de l'accumulateur, et le fluide circulant côté haute pression, qui quitte le condenseur. Cela fournit une augmentation supplémentaire de l'efficacité du climatiseur. La liaison des composants cités et essentiels du climatiseur a lieu alors de manière avantageuse par le biais de canalisations avec un diamètre de passage constant et circulaire. Un climatiseur de ce type est surtout caractérisé par le fait qu'il ne nécessité par exemple pas de détendeur thermostatique avec les inconvénients ou les déficits cités. En particulier les performances de l'évaporateur sont optimisées par l'alimentation de l'évaporateur avec une quantité appropriée, c'est-à-dire adaptée de fluide circulant. De la même manière, le radiateur de chauffage interne peut être alimenté en permanence et suffisamment en fluide circulant dans tous les états de fonctionnement importants, pour une configuration ou des dimensions demeurant constante(s), et il n'y a par exemple plus de risque d'une augmentation excessive et indésirable de la température du fluide circulant. De plus, une part de la capacité d'exploitation du fluide circulant, qui est perdue lors de l'étranglement du côté haute pression au côté basse pression, peut être utilisée. La pompe à éjecteur selon l'invention assure ainsi un fonctionnement optimal et continu, qui se remarque aussi bien dans des états de faible sollicitation que dans des états de sollicitation importante.

Selon un autre aspect de l'invention, le mode de réalisation particulier de la pompe à éjecteur consiste en ce que, en variante ou en complément de la caractéristique de l'extension de la buse jusqu'à au moins le diffuseur, au moins une chambre agissant comme un résonateur de Helmholtz est prévue dans la zone du diffuseur. La au moins une chambre dispose par exemple avantageusement d'un volume précis et est reliée à la zone d'écoulement du diffuseur par une ouverture étroite dans la paroi du diffuseur. Grâce à l'élasticité du fluide circulant qui se trouve à l'intérieur de la chambre lors du fonctionnement de la pompe à éjecteur, en liaison avec le fluide circulant qui se trouve dans l'ouverture, un système masse-ressort oscillant est concrètement mis à disposition, qui possède une fréquence de résonance propre prononcée et qui atténue les bruits ou ondes de pression de détente du ou des fluides circulants qui affluent dans le diffuseur.

Selon un autre aspect de l'invention, le diamètre traversé par le fluide circulant de l'entrée principale de la pompe à éjecteur selon l'invention est inférieur au diamètre traversé de l'entrée latérale. De ce fait, la pression statique dans la pompe à éjecteur s'établissant pour le fluide circulant qui afflue à travers l'entrée latérale se réduit. Cela a surtout pour conséquence une augmentation des performances de l'évaporateur et ainsi une plus grande efficacité du climatiseur, étant donné qu'une température plus faible peut être réglée pour l'évaporateur.

Dans un autre mode de réalisation de la pompe à éjecteur selon l'invention, la buse s'étend au moins sur la largeur de l'entrée latérale de la pompe à éjecteur. Cela augmente avantageusement par exemple l'action d'aspiration du fluide circulant qui entre par la buse sur le fluide circulant qui afflue par l'entrée latérale. De plus, les effets de frottement sont également diminués.

Dans un mode de réalisation préféré, la première zone de buse se compose de la partie d'une buse Laval et la seconde zone de buse se compose d'un tube se raccordant à la partie de buse Laval. Le tube peut alors aussi être entouré au moins partiellement d'une zone de la partie de buse Laval ou être logé par celle-ci. La première zone de buse se compose avantageusement de matière plastique comme par exemple du polypropylène (PP), du polyamide (PA) ou du polyphtalamide (PPA).

Dans une variante d'un autre mode de réalisation de la pompe à éjecteur, la première zone de buse réalisée, par exemple, comme une partie de buse Laval, et la seconde zone de buse réalisée, par exemple, comme une partie de tube, sont reliées au moyen d'une liaison adhésive ou d'une liaison par emboîtement et/ou au moyen d'un procédé de soudage par friction. En variante, la première zone de buse et la seconde zone de buse peuvent aussi être réalisées comme des éléments monopièces. Ceci permet de réaliser avant tout une fabrication et un assemblage simples.

Selon un autre aspect de l'invention, la buse de la pompe à éjecteur est agencée dans une partie de diamètre agrandi de la pompe à éjecteur. Ceci facilite surtout l'installation ainsi que le remplacement de la buse dans la pompe à éjecteur. De manière correspondante, le diffuseur pourrait aussi être agencé dans une partie agrandie de la pompe à éjecteur.

Selon un autre aspect de l'invention, au moins un joint torique se trouve sur au moins une partie de la surface de la buse. On obtient ainsi par exemple, dans un mode de réalisation approprié de la pompe à éjecteur avec un corps de base tubulaire, une bonne étanchéité entre la buse et le tube l'entourant. Une étanchéité avec au moins un joint torique empêche surtout que des courants de dérivation du fluide circulant qui afflue dans l'entrée principale, se forment.

Dans un autre mode de réalisation de la pompe à éjecteur selon l'invention, la pompe à éjecteur présente en amont, avant l'entrée de la buse, un filtre ou un filtre est agencé. Le filtre est alors avantageusement un microfiltre et peut empêcher que des saletés et des microparticules entrent dans la buse de la pompe à éjecteur.

Selon un autre aspect de l'invention, le diffuseur présente au moins une ouverture vers la chambre agissant comme un résonateur de Helmholtz. Bien entendu, une chambre fonctionnant de cette manière peut être reliée à la zone d'écoulement du diffuseur de manière fluidique par le biais de plusieurs ouvertures dans la paroi du diffuseur. Les ouvertures peuvent en variante par exemple présenter différentes dimensions et/ou diamètres. Ceci permet de réduire sensiblement le développement de bruits du fluide circulant qui se trouve dans la zone de détente, grâce au comportement de résonance encore plus prononcé.

Concernant un autre aspect de l'idée de l'invention, le diffuseur présente au moins une paroi s'étendant radialement vers l'extérieur. La paroi s'étend alors de la face extérieure de la paroi du diffuseur jusqu'à la paroi extérieure du corps de base de la pompe à éjecteur l'entourant. Ceci permet d'obtenir, le long de la zone du diffuseur, en ce qui concerne le revêtement extérieur du diffuseur par la paroi extérieure de la pompe à éjecteur, plusieurs chambres de différents volumes et donc de différents comportements de résonance. Ceci conduit surtout à une atténuation des bruits d'écoulement du fluide circulant qui se détend dans un large spectre de fréquences.

Selon un aspect de l'invention, le diamètre traversé de l'entrée du diffuseur, qui représente le plus petit diamètre traversé du diffuseur, se situe dans la plage allant de 8 mm à 30 mm, de préférence dans la plage allant de 13 mm à 17 mm. Ceci permet d'obtenir une conception géométrique optimale en ce qui concerne le fonctionnement d'un climatiseur pour des véhicules, comme par exemple des automobiles.

Selon un autre aspect de l'invention, le diamètre traversé de la sortie du diffuseur se situe dans la plage allant de 16 mm à 30 mm, de préférence dans la plage allant de 20 mm à 26 mm. Ceci permet d'obtenir une conception géométrique optimale en ce qui concerne le fonctionnement d'un climatiseur pour des véhicules, comme par exemple des automobiles.

Dans un autre mode de réalisation de la pompe à éjecteur selon l'invention, la buse s'étend en aval, au-delà de l'entrée du diffuseur, c'est-à-dire qu'elle dépasse dans la zone du diffuseur. Par exemple, la buse s'étend en aval sur une zone de 10 mm après l'entrée du diffuseur. Ceci permet d'améliorer encore les conditions d'écoulement et l'action d'aspiration du fluide circulant qui pénètre par la buse, engendrée sur le fluide circulant qui entre par l'entrée latérale, est augmentée.

En ce qui concerne un autre aspect de l'invention, l'angle conique α du diffuseur, qui est adapté pour décrire la structure conique du diffuseur, se situe dans la plage allant de 5° à 20°, de préférence dans la plage allant de 7° à 14°. Ceci permet d'obtenir une conception géométrique optimale en ce qui concerne le fonctionnement d'un climatiseur pour des véhicules, comme par exemple des automobiles.

Dans un autre mode de réalisation de la pompe à éjecteur selon l'invention, le diamètre traversé intérieur, c'est-à-dire le diamètre de la seconde zone de buse, se situe dans la plage allant de 0,4 mm à 1,8 mm. La longueur de la seconde zone de buse se situe avantageusement dans la zone allant de 5 mm à 100 mm, de préférence dans la zone allant de 10 mm à 30 mm. Ceci permet de faire fonctionner un climatiseur de manière optimale, même dans des états de sollicitation faibles, lors d'une utilisation de la pompe à éjecteur dans un climatiseur approprié.

Selon une autre idée de l'invention, un climatiseur est mis à disposition, qui est équipé d'une pompe à éjecteur décrite ci-dessus. La pompe à éjecteur peut alors présenter tout type de combinaison des caractéristiques exposées ci-dessus.

Un procédé pour faire fonctionner un climatiseur et/ou l'utilisation de la pompe à éjecteur selon l'invention pour fonctionner dans un climatiseur, en particulier pour un véhicule, est en outre aussi prévu, le climatiseur présentant la pompe à éjecteur selon l'invention décrite ci-dessus, et un fluide circulant, qui afflue par l'entrée principale de la pompe à éjecteur, aspirant un fluide circulant, qui afflue par l'entrée latérale.

En outre, un procédé pour faire fonctionner un climatiseur et/ou l'utilisation de la pompe à éjecteur selon l'invention pour fonctionner dans un climatiseur, en particulier pour un véhicule, est aussi prévu, le climatiseur présentant la pompe à éjecteur selon l'invention décrite ci-dessus, et le fluide circulant étant guidé, dans la zone du diffuseur, par l'intermédiaire du résonateur de Helmholtz ou de la chambre agissant comme un résonateur de Helmholtz. Ceci améliore avant tout, comme cela a déjà été indiqué, le comportement sonore lors du fonctionnement de la pompe à éjecteur.

En outre, selon le procédé selon l'invention, la pression statique du fluide circulant qui afflue par l'entrée latérale est, entre autres, réduite en fonction de la proportion du diamètre traversé de l'entrée latérale par rapport au diamètre traversé associé, c'est-à-dire effectif, de l'entrée du diffuseur (3a).

Bien entendu, les utilisations exposées de la pompe à éjecteur pour fonctionner dans un climatiseur et/ou le procédé sont couplés ou peuvent être couplés pour obtenir de meilleures performances du climatiseur.

Un climatiseur fonctionnant selon le procédé décrit ci-dessus présente avantageusement un mode de réalisation de la pompe à éjecteur décrite ci-dessus.

Selon un autre aspect, la pompe à éjecteur présente sensiblement une forme de T. En outre, la pompe à éjecteur, lorsqu'elle est installée par exemple dans un climatiseur approprié, est avantageusement réalisée comme une réunion de conduites tubulaire. De préférence, le diamètre de l'entrée principale et le diamètre de l'entrée latérale et le diamètre de la sortie sont circulaires. Dans la mesure où la seconde zone de buse de la buse est conçue de manière tubulaire, il est avantageux de réaliser celle-ci par un procédé d'extrusion.

Avantageusement, au moins une structure d'espacement, comme par exemple une douille d'écartement, se trouve, lorsque la buse et le diffuseur sont réalisés comme des composants séparés, entre la buse et le diffuseur.

Selon un autre aspect de l'invention, la buse et/ou le diffuseur sont réalisés par un procédé de moulage par injection. En variante, la seconde partie de buse, dans la mesure où elle est réalisée de manière tubulaire, est constituée en cuivre, en magnésium ou en aluminium.

Il est en outre évident que les caractéristiques exposées peuvent être combinées à volonté pour obtenir d'autres avantages et modes de réalisation.

D'autres propriétés et avantages de l'invention résultent de la description suivante de modes de réalisation de l'invention, en faisant référence aux figures annexées. Les modes de réalisation ne sont décrits qu'à titre d'exemple et ne sont en aucun cas restrictifs.

Sur les figures, on peut voir que :
la figure 1 représente une coupe transversale d'un mode de réalisation préféré de la pompe à éjecteur 1 selon l'invention ;
la figure 2 représente une coupe transversale d'un autre mode de réalisation préféré de la pompe à éjecteur 1 selon l'invention ;
la figure 3 représente une coupe transversale d'un autre mode de réalisation préféré de la pompe à éjecteur 1 selon l'invention ;
la figure 4 représente une coupe transversale d'un autre mode de réalisation préféré de la pompe à éjecteur 1 selon l'invention ;
la figure 5 représente une représentation schématique d'un climatiseur 1000, dans laquelle la pompe à éjecteur 1 selon l'invention est intégrée.

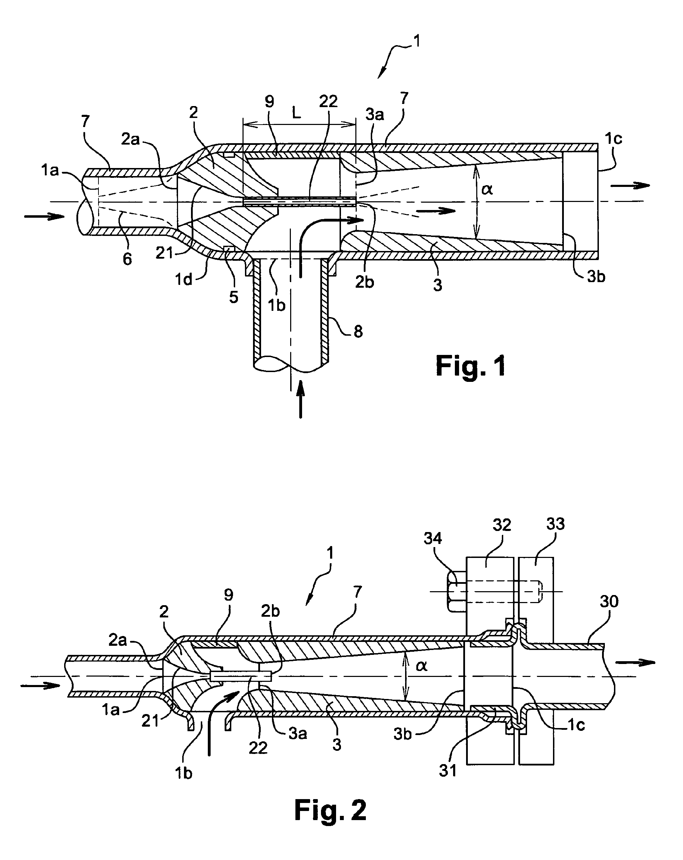

La figure 1 représente une coupe transversale d'un mode de réalisation préféré de la pompe à éjecteur 1 selon l'invention. La pompe à éjecteur 1 est alors réalisée comme une réunion de conduites (7, 8) tubulaire, et présente une entrée principale 1a, une entrée latérale 1b et une sortie 1c. Avantageusement, l'ensemble des diamètres traversés par un fluide circulant, c'est-à-dire les diamètres d'écoulement, ont une conception circulaire. La conception de la pompe à éjecteur 1 est alors en forme de T. En d'autres termes, l'emplacement du plan transversal de l'entrée principale 1a forme avec l'emplacement du plan transversal de l'entrée latérale 1b un angle de sensiblement 90°. En variante, l'angle pourrait aussi varier, de préférence dans la plage allant de 60° à 120°. L'emplacement du plan transversal de l'entrée principale 1a traversée par le fluide circulant est sensiblement parallèle à l'emplacement du plan transversal de la sortie 1c.

La partie de tube principale ou le tube principal 7 de la pompe à éjecteur 1 est alors relié de manière étanche au tube latéral 8 se trouvant au niveau de l'entrée latérale 1b de la pompe à éjecteur 1, c'est-à-dire sans fuir. L'entrée latérale 1b présente alors la largeur, c'est-à-dire le diamètre 1. La liaison du tube principal 7 avec le tube latéral 8 est alors avantageusement une liaison par soudure, par brasage ou par compression. En variante, le tube latéral 8 pourrait aussi être bridé au moyen d'une bride, à l'aide de dispositifs de serrage et d'éléments d'étanchéité comme par exemple des joints toriques, sur un embout saillant du tube principal 7, conçu de manière appropriée.

Dans la zone d'entrée, c'est-à-dire au niveau de l'entrée principale 1a du mode de réalisation de la pompe à éjecteur 1 selon l'invention représentée sur la figure 1, se trouve un filtre 6. Le filtre 6 est alors avantageusement un microfiltre et sert à empêcher les saletés et autres particules entraînées par le fluide circulant de parvenir dans la pompe à éjecteur 1.

Le tube principal 7 de la pompe à éjecteur 1 présente une partie de diamètre agrandi servant à intégrer les composants décrits encore plus précisément par la suite, laquelle est supérieure au diamètre de l'entrée principale 1a de la pompe à éjecteur 1. Ce diamètre agrandi est toutefois insignifiant en ce qui concerne le fluide circulant qui s'écoule par la pompe à éjecteur 1, de l'entrée principale 1a et de l'entrée latérale 1b. Cependant, lors de l'installation et de l'assemblage de la pompe à éjecteur 1, il agit très avantageusement, car un assemblage simple est ainsi assuré.

La pompe à éjecteur 1 de la figure 1 présente une buse 2 réalisée de manière adéquate selon une symétrie de rotation, qui se trouve après le filtre 6, au niveau de l'entrée principale 1. La buse 2 est intégrée dans la partie du diamètre agrandi du tube principal 7. La buse 2 se compose d'une première zone de buse avant 21 et d'une seconde zone de buse arrière 22, reliée ou intégrée à la première.

La zone de buse avant 21 comprend, au niveau de son profil extérieur, un évidement circulaire pour recevoir une bague d'étanchéité 5. La bague d'étanchéité 5 est avantageusement un joint torique réalisé avec un diamètre circulaire. La bague d'étanchéité 5 est représentée dans l'état installé, c'est-à-dire comprimé, et sert à créer une liaison étanche entre la buse 2 et la partie du tube principal 7 soutenant la buse 2. Outre la fixation de la buse 2 dans la pompe à éjecteur 1, c'est-à-dire sur la face interne du tube principal 7, cela permet aussi d'éviter que des courants de dérivation du fluide circulant, qui s'écoule au niveau de l'entrée principale 1a, se forment le long d'une fente se trouvant entre la face interne du tube principal 7 et la face externe de la buse 2 ou de la première zone de buse 21 et agissent de façon préjudiciable sur les conditions d'écoulement de la pompe à éjecteur 1.

La première zone de buse avant 21 imite ou est similaire, dans le mode de réalisation représenté de la pompe à éjecteur 1, à la partie ou à la zone d'entrée d'une buse Laval. Le diamètre traversé mis à disposition pour le flux de fluide circulant, qui s'écoule par l'entrée principale 1a, s'effile alors constamment à l'intérieur de la première zone de buse 21 jusqu'à un diamètre d'écoulement minimal. Avec un diamètre diminuant, la vitesse d'écoulement du flux de fluide circulant augmente donc dans la buse 2 en raison de la conservation massique.

La seconde zone de buse 22 qui se trouve ou qui est installée en aval de la première zone de buse 21 est avantageusement conçue comme un tube 22. Le diamètre traversé intérieur du tube 22 est de préférence identique au diamètre traversé intérieur à l'extrémité de la première zone de buse 21 réalisée à la manière d'une buse Laval, de manière à ce qu'un passage permanent soit assuré pour le fluide circulant qui s'écoule. La première zone de buse 21, c'est-à-dire la partie de buse Laval 21 est avantageusement conçue en matière plastique. La seconde zone de buse 22, c'est-à-dire le tube 22 est avantageusement conçu en cuivre ou en aluminium. Dans la buse 2 représentée, le tube 22 est comprimé avec la zone arrière située en aval de la partie de buse Laval 21. Le tube 22 pourrait être aussi en variante par exemple collé ou soudé à la partie de buse Laval 21. Une réalisation intégrale, monopièce de la buse 2 en métal ou en matière plastique serait également envisageable. Dans un autre mode de réalisation, le diamètre traversé intérieur du tube 22 pourrait constamment augmenter en direction de la sortie de buse 2b.

Dans l'exemple de réalisation de la pompe à éjecteur 1 selon l'invention représenté sur la figure 1, se trouve, en aval de la buse 2, dans la partie de diamètre agrandi du tube principal 7, un diffuseur 3 avec une entrée de diffuseur 3a et une sortie de diffuseur 3b, la sortie de diffuseur 3b coïncidant, dans le mode de réalisation de la pompe à éjecteur 1 représenté, avec la sortie 1c de la pompe à éjecteur 1. L'entrée du diffuseur 3a présente un diamètre traversé qui est à son minimum au niveau du diffuseur 3. Le diamètre circulaire traversé augmente constamment par rapport au diamètre, en partant du diamètre de l'entrée du diffuseur 3a jusqu'à la sortie du diffuseur 3b, de manière linéaire, c'est-à-dire que le diamètre traversé s'agrandit progressivement et pas brusquement. La conception du diffuseur 3 est de forme tronconique, l'inclinaison du cône tronqué pouvant être décrite sur l'angle d'inclinaison ou conique α. Le profil extérieur du diffuseur 3 est alors avantageusement collé ou comprimé au tube principal 7 dans le diamètre agrandi du tube principal 7 ou relié de façon étanche d'une quelconque manière au tube principal 7.

La buse 2 est espacée du diffuseur 3 au moyen d'une douille 9 dans la pompe à éjecteur 1 représentée. Dans un autre mode de réalisation de la pompe à éjecteur 1, la buse 2 et le diffuseur 3 sont réalisés intégralement en tant qu'élément monopièce.

La seconde zone de buse 22, c'est-à-dire le tube 22 s'étend, dans le mode de réalisation représenté de la pompe à éjecteur 1 selon l'invention, jusqu'à l'entrée du diffuseur 3a. En d'autres termes, le diamètre traversé de la sortie de la buse 2b et celui de la sortie du diffuseur 3a se trouvent à la même place, c'est-à-dire que les diamètres traversés respectifs coïncident. Ceci permet d'obtenir un écoulement ou une action d'écoulement optimal(e) pendant le fonctionnement de la pompe à éjecteur 1, qui conduit par exemple à une augmentation de l'efficacité d'un climatiseur. En particulier pour le fluide circulant aspiré dans l'entrée latérale 1b avec une largeur ou un diamètre 1, on obtient des conditions d'écoulement, c'est-à-dire une action d'aspiration, optimale. L'action d'aspiration est alors obtenue par le fluide circulant qui sort de la buse 2. Un mélange du fluide circulant qui pénètre par la buse 2 avec le fluide circulant qui pénètre par l'entrée latérale 1b a lieu dans la partie d'écoulement, c'est-à-dire dans la zone du diffuseur 3. La partie d'écoulement coïncide alors avec la partie d'augmentation de la pression et une partie de mélange supplémentaire de diamètre constant est superflue. On parvient aussi de ce fait à éviter des turbulences indésirables dans les écoulements.

Dans un mode de réalisation avantageux, le diamètre intérieur traversé et sensiblement constant du tube 22 se situe dans la plage allant de 0,4 mm à 0,8 mm. La longueur L du tube 22 se situe dans la plage allant de 5 mm à 100 mm, de préférence dans la plage allant de 10 mm à 30 mm. Ceci permet de générer, dans des conditions de fonctionnement adéquates, un courant jet. Le diamètre traversé au niveau de l'entrée du diffuseur 3a se situe avantageusement dans la plage allant de 8 mm à 30 mm, de préférence dans la plage allant de 13 mm à 17 mm. Le diamètre traversé au niveau de la sortie du diffuseur 3b se situe avantageusement dans la plage allant de 16 mm à 30 mm, de préférence dans la plage allant de 20 mm à 26 mm. L'angle conique α du diffuseur 3 se situe avantageusement dans la plage allant de 5° à 20°, de préférence dans la plage allant de 7° à 14°.

Un autre avantage lors du fonctionnement de la pompe à éjecteur 1 selon l'invention dans un climatiseur correspondant, qui va être décrit par la suite à titre d'exemple, est que la buse 2 fonctionne aussi de manière optimale par rapport à un écoulement à deux phases et s'adapte aussi à des vitesses d'écoulement élevées.

La figure 2 représente une coupe transversale d'un autre mode de réalisation préféré de la pompe à éjecteur 1 selon l'invention, avec les caractéristiques essentielles de la pompe à éjecteur 1 représentée sur la figure 1, toutefois dans l'état installé côté sortie par rapport à la pompe à éjecteur 1.

La buse 2 de la pompe à éjecteur 1 se compose ici d'une première zone de buse 21 dont le profil est similaire à celui d'une buse Laval, comme cela a déjà été décrit, et d'une seconde zone de buse 22 qui est conçue comme un tube 22 et qui présente la longueur L. La buse 2 ou le tube 22 s'étend, dans ce mode de réalisation représenté, dans la zone du diffuseur 3. En d'autres termes, la buse 2 dépasse en aval au-delà de l'entrée du diffuseur 3a, c'est-à-dire que le diamètre traversé de la sortie de la buse 2a se situe plus en aval en direction de l'écoulement que le diamètre traversé 3a du diffuseur 3.

En aval après la sortie du diffuseur 3b de la pompe à éjecteur 1, le tube principal 7 de la pompe à éjecteur 1 est relié, par le biais d'une liaison par serrage 32, 33, 34, à un autre tube 30. L'autre tube 30 s'étend alors, sur une certaine zone, dans le tube principal 7 de la pompe à éjecteur 1 et se termine juste avant la sortie du diffuseur 3b. La liaison par serrage se compose alors de deux corps partiels 32, 33 pouvant être assemblés, qui peuvent par exemple être reliés à l'aide d'une vis 34. Pour assurer une liaison étanche, des bagues d'étanchéité 31 sont comprimées entre la partie d'extrémité du tube principal 7 de la pompe à éjecteur 1 et une partie extérieure du tube 30.

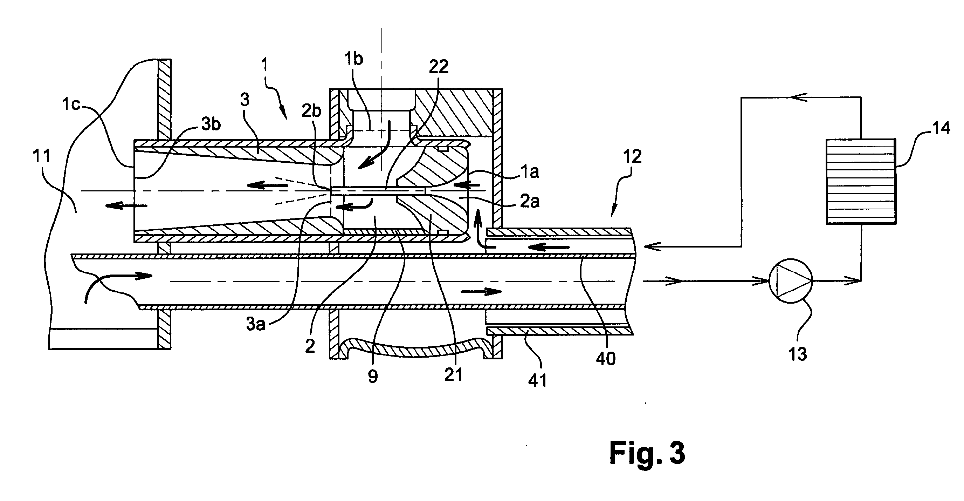

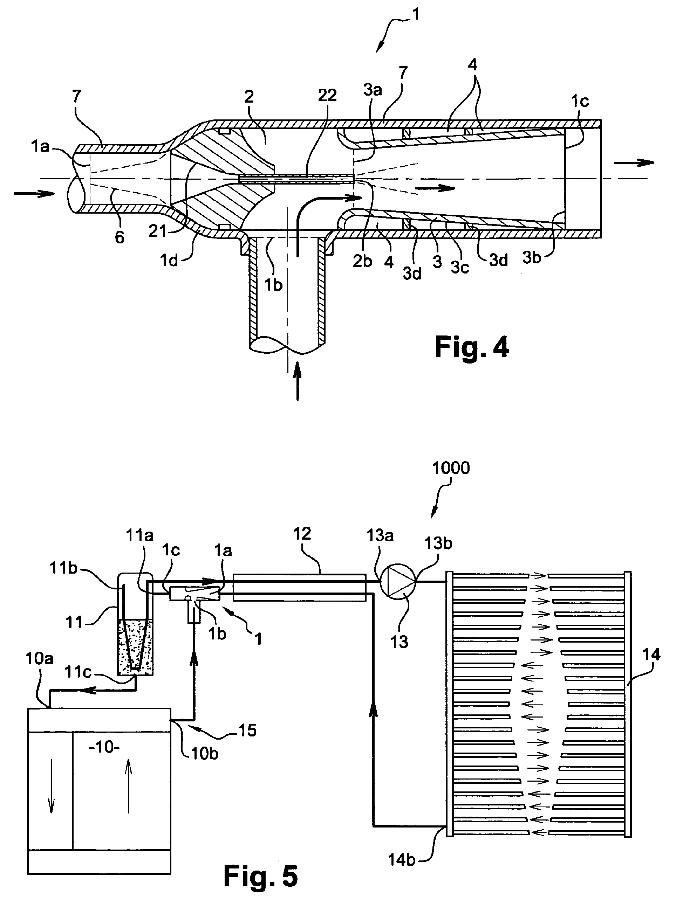

La figure 3 représente une coupe transversale d'un autre mode de réalisation préféré de la pompe à éjecteur 1 selon l'invention, dans un état installé, c'est-à-dire dans lequel la pompe à éjecteur 1 est intégrée dans un climatiseur 1000 (voir figure 5). La pompe à éjecteur 1 représentée présente alors les caractéristiques de la pompe à éjecteur 1 représentée sur la figure 1. L'entrée principale 1a de la pompe à éjecteur 1 coïncide ici avec l'entrée de la buse 2a. La sortie 1c coïncide avec la sortie du diffuseur 3b.

L'entrée principale la est alors traversée par un fluide circulant sous haute pression, qui a été comprimé par un compresseur 13 (voir figure 5) et un condenseur 14 (voir figure 5). Le fluide circulant traverse alors la conduite tubulaire 41. La sortie 1c de la pompe à éjecteur 1 est reliée à un dispositif de séparation gaz / liquide, c'est-à-dire un accumulateur 11 (représenté partiellement sur la figure 3) pour collecter le fluide circulant. Du fluide circulant peut être aspiré à partir de l'accumulateur 11, par le biais d'une conduite tubulaire 40, au moyen d'un compresseur 13 raccordé (voir figure 5). La conduite de liaison, c'est-à-dire la conduite tubulaire 41 allant du condenseur 14 à la pompe à éjecteur 1 comprend, c'est-à-dire dans une certaine zone, la conduite de liaison, c'est-à-dire la conduite tubulaire 40 allant de l'accumulateur 11 à la pompe à éjecteur 1. La conduite tubulaire 40 et la conduite tubulaire 41 forment alors un radiateur de chauffage interne à contre-courant 12 avec le mode d'action connu ou déjà décrit.

La figure 4 représente une coupe transversale d'un autre mode de réalisation préféré de la pompe à éjecteur 1 selon l'invention. La pompe à éjecteur 1 représentée comprend alors, entre autres, toutes les caractéristiques essentielles, déjà décrites à l'aide de la figure 1, de la pompe à éjecteur 1. De plus, la pompe à éjecteur 1 représentée sur la figure 4 possède toutefois, dans la zone du diffuseur 3, des chambres 4 agissant comme un résonateur de Helmholtz. Les chambres 4 sont alors formées d'une part par la paroi du tube principal 7, la paroi du diffuseur 3 et sont positionnées sectoriellement par des parois 3d s'étendant ou se prolongeant radialement vers l'extérieur. Les parois 3d s'étendant radialement vers l'extérieur améliorent en outre aussi les propriétés relatives à la mécanique de structure de la pompe à éjecteur 1, ce qui permet d'augmenter la stabilité et la rigidité d'une pompe à éjecteur 1 de ce type, aux multiples fonctions.

La buse 2 est alors comprimée avec la face interne du tube principal 7 de la pompe à éjecteur 1.

Par les ouvertures 3c, qui sont par exemple avantageusement réalisées comme des perçages 3c avec un diamètre circulaire, le volume des chambres 4 peut être rempli avec du fluide circulant. Le fluide circulant qui se trouve, lors du fonctionnement de la pompe à éjecteur 1, dans les ouvertures 3c, agit alors avec le fluide circulant qui se trouve dans les chambres 4 comme un système masse-ressort oscillant et sert à atténuer le fluide circulant qui se détend ou pénètre dans le diffuseur 3. Cela entraîne une réduction sensible des bruits engendrés et augmente ainsi le confort du climatiseur.

La figure 5 représente un climatiseur 1000 représenté de manière schématique avec une pompe à éjecteur 1 intégrée selon la présente invention. Le climatiseur 1000 comprend un dispositif de compression, c'est-à-dire un compresseur 13, réglé ou commandé de manière interne ou externe, et également un radiateur de chauffage raccordé à la sortie, c'est-à-dire au côté haute pression 13b du compresseur 13, servant de condenseur 14. Le côté sortie ou la sortie 14b du condenseur 14 est relié(e) à l'entrée principale 1a de la pompe à éjecteur 1 selon l'invention. La sortie 1c de la pompe à éjecteur 1 est reliée à l'entrée 11a d'un accumulateur 11.

L'accumulateur 11 dispose à son tour d'une part d'une première sortie 11b qui est reliée à l'entrée 13a du compresseur 13. D'autre part, l'accumulateur 11 présente une seconde sortie 11c, qui est reliée à l'entrée 10a d'un radiateur de chauffage servant d'évaporateur 10. La sortie 10b de l'évaporateur 10 est à son tour reliée à l'entrée latérale 1c de la pompe à éjecteur 1 selon l'invention, un robinet 15 se trouvant au milieu, c'est-à-dire entre la sortie 10b de l'évaporateur 10 et l'entrée latérale 1c de la pompe à éjecteur 1.

En outre, le climatiseur 1000 représenté schématiquement sur la figure 5 dispose d'un radiateur de chauffage 12 interne qui est prévu comme radiateur de chauffage à contre-courant pour échanger de la chaleur entre le côté haute pression et le côté basse pression. Le côté basse pression représente le côté d'aspiration du compresseur 13 et le côté haute pression se trouve entre la sortie 14b du condenseur 14 et l'entrée principale 1a de la pompe à éjecteur 1.

Les marquages en forme de triangle, à la manière de flèches, situés sur les conduites de liaison ou sur les tubes de liaison entre les différents composants du climatiseur 1000 représentent le sens respectif de l'écoulement du fluide circulant.

Avec le climatiseur décrit, équipé de la pompe à éjecteur selon l'invention, dont le mode d'action a déjà été décrit plus haut, un climatiseur fonctionnant de manière optimale par rapport au mode de fonctionnement, de la rentabilité et du comportement sonore, est mis à disposition.

## Revendications

1. Pompe à éjecteur (1), en particulier pour le climatiseur (1000) d'un véhicule, avec une entrée principale (1a), une entrée latérale (1b) et une sortie (1c), la pompe à éjecteur (1) présentant au niveau de l'entrée principale (1a) une buse (2) avec une sortie de buse (2b) et un diffuseur (3) situé en aval de la buse (2) avec une entrée de diffuseur (3a), la buse (2) s'étendant au moins jusqu'à l'entrée du diffuseur (3a), **caractérisé en ce que** la buse (2) étant similaire dans une première zone de buse (21) à une partie de buse Laval, la buse (2) étant similaire dans une seconde zone de buse (22) à une partie de tube.

2. Pompe à éjecteur (1) selon la revendication 1, en particulier pour le climatiseur (1000) d'un véhicule, avec une entrée principale (1a), une entrée latérale (1b) et une sortie (1c) la pompe à éjecteur (1) présentant, au niveau de l'entrée principale (1a) une buse (2) avec une sortie de buse (2b) et un diffuseur (3) situé en aval de la buse (2) avec une entrée de diffuseur (3a), au moins une chambre (4) agissant comme un résonateur de Helmholtz étant agencée dans la zone du diffuseur (3).

3. Pompe à éjecteur (1) selon l'une quelconque des revendications précédentes, le diamètre de l'entrée principale (1a) étant inférieur au diamètre de l'entrée latérale (1b).

4. Pompe à éjecteur (1) selon l'une quelconque des revendications précédentes, la buse (2) s'étendant au moins sur la largeur (1) de l'entrée latérale (1b).

5. Pompe à éjecteur (1) selon l'une quelconque des revendications précédentes, la première zone de buse (21) et la seconde zone de buse (22) étant reliées au moyen d'une liaison adhésive et/ou au moyen d'un procédé de soudage par friction, ou sent réalisées intégralement en tant qu'élément monopièce.

6. Pompe à éjecteur (1) selon l'une quelconque des revendications précédentes, la buse (2) étant agencée dans une partie (1d) de diamètre agrandi de la pompe à éjecteur (1).

7. Pompe à éjecteur (1) selon l'une quelconque des revendications précédentes, au moins un joint torique (5) se trouvant au moins sur une partie de la surface de la buse (2).

8. Pompe à éjecteur (1) selon l'une quelconque des revendications précédentes, un filtre (6) étant agencé en amont, avant une entrée de buse (2a) de la buse (2).

9. Pompe à éjecteur (1) selon l'une quelconque des revendications 2 à 8, le diffuseur (3) présentant au moins une ouverture (3c) vers la chambre (4) agissant comme un résonateur de Helmholtz.

10. Pompe à éjecteur (1) selon l'une quelconque des revendications 2 à 9, le diffuseur (3) présentant au moins une paroi (3d) s'étendant radialement vers l'extérieur.

11. Pompe à éjecteur (1) selon l'une quelconque des revendications précédentes, le diamètre de l'entrée du diffuseur (3a) se situant dans la plage allant de 8 mm à 30 mm.

12. Pompe à éjecteur (1) selon l'une quelconque des revendications précédentes, la buse (2) s'étendant en aval sur une zone de 10 mm après l'entrée du diffuseur (3a).

13. Pompe à éjecteur (1) selon l'une quelconque des revendications précédentes, un angle conique α du diffuseur (3) se situant dans la plage allant de 5° à 20°, de préférence dans la plage allant de 7° à 14°.

14. Pompe à éjecteur (1) selon l'une quelconque des revendications précédentes, le diamètre intérieur de la seconde zone de buse (22) se situant dans la plage allanL de 0,4 mm à 1,8 mm.

15. Pompe à éjecteur (1) selon l'une quelconque des revendications précédentes, la longueur (L) de la seconde zone de buse (22) se situant dans la plage allant de 5 mm à 100 mm, de préférence dans la plage allant de 10 mm à 30 mm.

16. Climatiseur (1000) avec une pompe à éjecteur (1) selon l'une quelconque des revendications précédentes.

17. Utilisation d'une pompe à éjecteur (1), ladite pompe à éjecteur étant conforme à l'une quelconque des revendications 1 à 15, pour fonctionner dans un climatiseur (1000), en particulier pour un véhicule, la pompe à éjecteur (1) présentant, au niveau de l'entrée principale (1a) une buse (2) avec une sortie de buse (2b) et un diffuseur (3) situé en aval de la buse (2) avec une entrée de diffuseur (3a), la buse (2) s'étendant au moins jusqu'à l'entrée du diffuseur (3a), un fluide circulant, qui afflue par l'entrée principale (1a), aspirant un fluide circulant qui afflue par l'entrée latérale (1b).

18. Utilisation d'une pompe à éjecteur (1) selon la revendication 17 pour fonctionner dans un climatiseur (1000), en particulier pour un véhicule, avec une pompe à éjecteur (1), la pompe à éjecteur (1) présentant, au niveau de l'entrée principale (1a), une buse (2) avec une sortie de buse (2b) et un diffuseur (3) situé en aval de la buse (2) avec une entrée de diffuseur (3a), au moins une chambre (4) agissant comme un résonateur de Helmholtz étant agencée dans la zone du diffuseur (3), un fluide circulant étant guidé dans la zone du diffuseur (3) par le biais du résonateur de Helmholtz.

19. Utilisation de la pompe à éjecteur (1) selon la revendication 17 ou 18, la pression statique du fluide circulant, qui afflue par l'entrée latérale (1b), étant réduite, entre autres, en fonction de la proportion du diamètre traversé de l'entrée latérale (1b) par rapport au diamètre associé de l'entrée du diffuseur (3a).

20. Utilisation de la pompe à éjecteur (1) selon l'une quelconque des revendications 17 à 19 pour faire fonctionner un climatiseur (1000) selon la revendication 16.

## Patentansprüche

1. Ejektorpumpe (1), insbesondere für die Klimaanlage (1000) eines Fahrzeugs, mit einem Haupteingang (1a), einem Seiteneingang (1b) und einem Ausgang (1c), wobei die Ejektorpumpe (1) im Bereich des Haupteingangs (1a) eine Düse (2) mit einem Düsenausgang (2b) und einen Diffusor (3), der sich stromabwärts zu der Düse (2) befindet und einen Diffusoreingang (3a) aufweist, umfasst, wobei sich die Düse (2) mindestens bis zum Eingang des Diffusors (3a) erstreckt, **dadurch gekennzeichnet, dass** die Düse (2) in einer ersten Düsenzone (21) einem Lavaldüsenteil ähnlich ist, wobei die Düse (2) in einer zweiten Düsenzone (22) einem Rohrteil ähnlich ist.

2. Ejektorpumpe (1) nach Anspruch 1, insbesondere für die Klimaanlage (1000) eines Fahrzeugs, mit einem Haupteingang (1a), einem Seiteneingang (1b) und einem Ausgang (1c), wobei die Ejektorpumpe (1) im Bereich des Haupteingangs (1a) eine Düse (2) mit einem Düsenausgang (2b) und einen Diffusor (3), der sich stromabwärts zu der Düse (2) befindet und einen Diffusoreingang (3a) aufweist, umfasst, wobei mindestens eine Kammer (4), die als ein Helmholtz-Resonator fungiert, in der Zone des Diffusors (3) angeordnet ist.

3. Ejektorpumpe (1) nach einem der vorhergehenden Ansprüche, wobei der Durchmesser des Haupteingangs (1a) kleiner als der Durchmesser des Seiteneingangs (1b) ist.

4. Ejektorpumpe (1) nach einem der vorhergehenden Ansprüche, wobei sich die Düse (2) mindestens auf der Breite (1) des Seiteneingangs (1b) erstreckt.

5. Ejektorpumpe (1) nach einem der vorhergehenden Ansprüche, wobei die erste Düsenzone (21) und die zweite Düsenzone (22) mit Hilfe einer Haftverbindung und/oder mit Hilfe eines Reißschweißverfahrens verbunden oder zur Gänze als einstückiges Element ausgeführt sind.

6. Ejektorpumpe (1) nach einem der vorhergehenden Ansprüche, wobei die Düse (2) in einem Teil (1d) mit vergrößertem Durchmesser der Ejektorpumpe (1) angeordnet ist.

7. Ejektorpumpe (1) nach einem der vorhergehenden Ansprüche, wobei sich mindestens eine Ringdichtung (5) mindestens auf einem Teil der Oberfläche der Düse (2) befindet.

8. Ejektorpumpe (1) nach einem der vorhergehenden Ansprüche, wobei ein Filter (6) stromaufwärts vor einem Düseneingang (2a) der Düse (2) angeordnet ist.

9. Ejektorpumpe (1) nach einem der Ansprüche 2 bis 8, wobei der Diffusor (3) mindestens eine Öffnung (3c) zu der Kammer (4) hin aufweist, die als ein Helmholtz-Resonator fungiert.

10. Ejektorpumpe (1) nach einem der Ansprüche 2 bis 9, wobei der Diffusor (3) mindestens eine Wand (3d) aufweist, die sich radial nach außen erstreckt.

11. Ejektorpumpe (1) nach einem der vorhergehenden Ansprüche, wobei der Durchmesser des Eingangs des Diffusors (3a) in dem Bereich von 8 mm bis 30 mm liegt.

12. Ejektorpumpe (1) nach einem der vorhergehenden Ansprüche, wobei sich die Düse (2) stromabwärts auf einer Zone von 10 mm nach dem Eingang des Diffusors (3a) erstreckt.

13. Ejektorpumpe (1) nach einem der vorhergehenden Ansprüche, wobei ein konischer Winkel α des Diffusors (3) in dem Bereich von 5° bis 20°, vorzugsweise in dem Bereich von 7° bis 14°, liegt.

14. Ejektorpumpe (1) nach einem der vorhergehenden Ansprüche, wobei der Innendurchmesser der zweiten Düsenzone (22) in dem Bereich von 0,4 mm bis 1,8 mm liegt.

15. Ejektorpumpe (1) nach einem der vorhergehenden Ansprüche, wobei die Länge (L) der zweiten Düsenzone (22) in dem Bereich von 5 mm bis 100 mm, vorzugsweise in dem Bereich von 10 mm bis 30 mm, liegt.

16. Klimaanlage (1000) mit einer Ejektorpumpe (1) nach einem der vorhergehenden Ansprüche.

17. Verwendung einer Ejektorpumpe (1), wobei die Ejektorpumpe einem der Ansprüche 1 bis 15 entspricht, um in einer Klimaanlage (1000), insbesondere für ein Fahrzeug, zu funktionieren, wobei die Ejektorpumpe (1) im Bereich des Haupteingangs (1a) eine Düse (2) mit einem Düsenausgang (2b) und einen Diffusor (3), der sich stromabwärts zur Düse (2) befindet und einen Diffusoreingang (3a) aufweist, umfasst, wobei sich die Düse (2) mindestens bis zum Eingang des Diffusors (3a) erstreckt, wobei ein zirkulierendes Fluid, das durch den Haupteingang (1a) zufließt, ein zirkulierendes Fluid, das durch den Seiteneingang (1b) zufließt, ansaugt.

18. Verwendung einer Ejektorpumpe (1) nach Anspruch 17, um in einer Klimaanlage (1000) insbesondere für ein Fahrzeug mit einer Ejektorpumpe (1) zu funktionieren, wobei die Ejektorpumpe (1) im Bereich des Haupteingangs (1a) eine Düse (2) mit einem Düsenausgang (2b) und einen Diffusor (3), der sich stromabwärts zur Düse (2) befindet und einen Diffusoreingang (3a) aufweist, umfasst, wobei mindestens eine Kammer (4), die als ein Helmholtz-Resonator fungiert, in der Zone des Diffusors (3) angeordnet ist, wobei ein zirkulierendes Fluid in der Zone des Diffusors (3) über den Helmholtz-Resonator geführt wird.

19. Verwendung der Ejektorpumpe (1) nach Anspruch 17 oder 18, wobei der statische Druck des zirkulierenden Fluids, das durch den Seiteneingang (1b) zufließt, unter anderem in Abhängigkeit vom Verhältnis des durchquerten Durchmessers des Seiteneingangs (1b) zum zugehörigen Durchmesser des Eingangs des Diffusors (3a) verringert wird.

20. Verwendung der Ejektorpumpe (1) nach einem der Ansprüche 17 bis 19, um eine Klimaanlage (1000) nach Anspruch 16 zu betreiben.

## Claims

1. Ejector pump (1), particularly for a vehicle air conditioner (1000), with a main inlet (1a), a lateral inlet (1b) and an output (1c), the ejector pump (1) having, at the main inlet (1a), a nozzle (2) with a nozzle outlet (2b) and a diffuser (3) situated downstream of the nozzle (2) with a diffuser inlet (3a), the nozzle (2) extending at least as far as the inlet of the diffuser (3a), **characterized in that** the nozzle (2) is similar in a first nozzle zone (21) to part of a Laval nozzle, the nozzle (2) being similar in a second nozzle zone (22) to part of a tube.

2. Ejector pump (1) according to claim 1, particularly for a vehicle air conditioner (1000), with a main inlet (1a), a lateral inlet (1b) and an output (1c), the ejector pump (1) having, at the main inlet (1a), a nozzle (2) with a nozzle outlet (2b) and a diffuser (3) situated downstream of the nozzle (2) with a diffuser inlet (3a), at least one chamber (4) acting as a Helmholtz resonator being arranged in the zone of the diffuser (3).

3. Ejector pump (1) according to any one of the preceding claims, the diameter of the main inlet (1a) being smaller than the diameter of the lateral inlet (1b).

4. Ejector pump (1) according to any one of the preceding claims, the nozzle (2) extending at least over the width (1) of the lateral inlet (1b).

5. Ejector pump (1) according to any one of the preceding claims, the first nozzle zone (21) and the second nozzle zone (22) being connected by means of an adhesive connection and/or by means of a friction welding method or are produced as a one-piece integral part.

6. Ejector pump (1) according to any one of the preceding claims, the nozzle (2) being arranged in an enlarged-diameter part (1d) of the ejector pump (1).

7. Ejector pump (1) according to any one of the preceding claims, at least one O-ring seal (5) being positioned at least on part of the surface of the nozzle (2).

8. Ejector pump (1) according to any one of the preceding claims, a filter (6) being arranged upstream, before a nozzle inlet (2a) of the nozzle (2).

9. Ejector pump (1) according to any one of Claims 2 to 8, the diffuser (3) having at least one opening (3c) towards the chamber (4) acting as a Helmholtz resonator.

10. Ejector pump (1) according to any one of Claims 2 to 9, the diffuser (3) having at least one wall (3d) extending radially outwards.

11. Ejector pump (1) according to any one of the preceding claims, the diameter of the inlet of the diffuser (3a) being in the range from 8 mm to 30 mm.

12. Ejector pump (1) according to any one of the preceding claims, the nozzle (2) extending downstream over a zone measuring 10 mm after the inlet of the diffuser (3a).

13. Ejector pump (1) according to any one of the preceding claims, a cone angle α of the diffuser (3) lying in the range from 5° to 20°, preferably in the range from 7° to 14°.

14. Ejector pump (1) according to any one of the preceding claims, the inside diameter of the second nozzle zone (22) being in the range from 0.4 mm to 1.8 mm.

15. Ejector pump (1) according to any one of the preceding claims, the length (L) of the second nozzle zone (22) being in the range from 5 mm to 100 mm, preferably in the range from 10 mm to 30 mm.

16. Air conditioner (1000) with an ejector pump (1) according to any one of the preceding claims.

17. Use of an ejector pump (1), the said ejector pump being in accordance with any one of Claims 1 to 15, for operating in an air conditioner (1000), particularly for a vehicle, the ejector pump (1) having, at the main inlet (1a), a nozzle (2) with a nozzle outlet (2b) and a diffuser (3) situated downstream of the nozzle (2) with a diffuser inlet (3a), the nozzle (2) extending at least as far as the inlet of the diffuser (3a), a circulating fluid, which enters via the main inlet (1a), drawing in a circulating fluid which enters via the lateral inlet (1b).

18. Use of an ejector pump (1) according to Claim 17 for operating in an air conditioner (1000), particularly for a vehicle, with an ejector pump (1), the ejector pump (1) having, at the main inlet (1a), a nozzle (2) with a nozzle outlet (2b) and a diffuser (3) situated downstream of the nozzle (2) with a diffuser inlet (3a), at least one chamber (4) acting as a Helmholtz resonator being arranged in the zone of the diffuser (3), a circulating fluid being guided in the zone of the diffuser (3) by the Helmholtz resonator.

19. Use of the ejector pump (1) according to Claim 17 or 18, the static pressure of the circulating fluid entering via the lateral inlet (1b) being reduced, amongst other things, according to the proportion of the through-diameter of the lateral inlet (1b) with respect to the associated diameter of the inlet of the diffuser (3a).

20. Use of the ejector pump (1) according to any one of Claims 17 to 19 for operating an air conditioner (1000) according to Claim 16.
